# FASCICULE DE BREVET EUROPEEN

(11) **EP 1 819 560 B1**
(45) Date de publication et mention de la délivrance du brevet: **17.09.2008**
(21) Numéro de dépôt: 05781821.3
(22) Date de dépôt: 29.06.2005
(51) Int. Cl.: B60S 3/04

(54) **TUNNEL DE LAVAGE DE VEHICULES**
TUNNEL-AUTOWASCHANLAGE
TUNNEL CAR WASH

(30) Priorité: 14.09.2004 FR 0452036
(43) Date de publication de la demande: 22.08.2007
(73) Titulaire: Tunnel de Lavage, 10000 Troyes (FR)
(72) Inventeur: Duterme, Claude, 1000 Troyes0 (FR)
(74) Mandataire: Herrburger, Pierre
(86) Numéro de dépôt international: PCT/FR2005/050512
(87) Numéro de publication internationale: WO 2006/030139

(56) Documents cités:
- EP-A- 0 872 392
- WO-A-20/04039509
- DE-U1- 29 816 520
- US-A1- 2003 233 153

## Description

### Domaine de l'invention

La présente invention concerne un tunnel de lavage de véhicules comprenant une entrée de détrempe et un arceau de prélavage, des moyens de nettoyage, de rinçage et de séchage et une centrale de commande. Un tel tunnel de lavage est connu du document WO 2004/039509.

### Etat de la technique

Il existe différentes formes de tunnel de lavage du type défini ci-dessus.

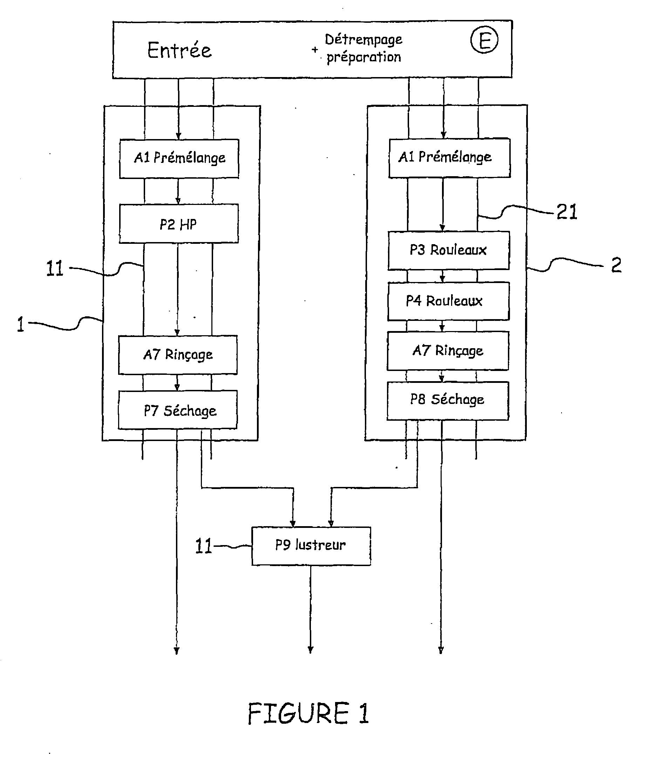

La figure 1 donne un exemple d'une installation de lavage formée de deux tunnels de lavage ayant des fonctionnalités différentes. Ces deux tunnels de lavage sont éventuellement reliés en sortie à un portique lustreur.

De manière plus détaillée, l'installation de lavage de véhicule à deux tunnels se compose d'une entrée E de détrempage et de préparation dans laquelle le véhicule est préparé (fixation des antennes, des essuie-glaces, démontage éventuel de l'antenne, rabattement des rétroviseurs).

Après cette étape préparatoire, le véhicule peut passer dans le tunnel de lavage à haute pression 1 ou dans le tunnel de lavage à rouleaux 2.

Le tunnel de lavage à haute pression 1 se compose d'un moyen de circulation 11 pour entraîner le véhicule à travers les différents postes de lavage. Le tunnel de lavage haute pression 1 est équipé d'un arceau de prélavage A1 suivi d'un portique de lavage haute pression P2. Le portique haute pression P2 est un portique équipé de buses réparties sur les côtés et le dessus de manière à projeter sur le véhicule de l'eau sous la forme de jets étalés à haute pression. Les buses sont montées sur des équipements mobiles de façon à pouvoir se rapprocher de la carrosserie tant sur les côtés que sur le dessus. Le portique circule par rapport au véhicule et parcours celui-ci d'avant en arrière et inversement. Il nettoie le bas de la caisse avec les roues, les côtés et le dessus.

Après le portique haute pression P2, le véhicule passe par un arceau de rinçage A7 qui pulvérise du liquide de rinçage avec, le cas échéant, de la cire et enfin, il passe dans le portique de séchage P7 formé de buses dirigeant des jets d'air violents sur la carrosserie pour évacuer le liquide et sécher la carrosserie.

Le tunnel de lavage à rouleaux 2 se compose, comme le tunnel de lavage haute pression, d'un chemin de circulation du véhicule, muni de moyens tels qu'un chariot poussant ou tirant le véhicule à travers le tunnel entre l'entrée et la sortie. A l'entrée, le tunnel comporte un arceau A1 de prélavage suivi d'un ou de deux portiques à rouleaux P3, P4. ces portiques à rouleaux comportent chacun deux rouleaux verticaux destinés à nettoyer les côtés de la carrosserie et un rouleau horizontal supérieur qui nettoie le dessus de la carrosserie.

Après le ou les portiques à rouleaux, le tunnel comporte un arceau de rinçage A7 suivi d'un portique de séchage P8.

Les véhicules ayant suivi le tunnel de lavage haute pression HP ou le tunnel de lavage à rouleaux peuvent quitter l'installation directement. Les véhicules secs peuvent également passer par une installation de lustrage 3 composée d'un portique lustreur P9 formé de rouleaux lustreurs et d'un distributeur d'agent lustrant. Les rouleaux lustreurs sont des rouleaux à lanières textiles, qui lustrent la carrosserie en même temps que l'on projette sur celle-ci un agent lustreur.

Cette installation connue quoi que fonctionnant de manière satisfaisante présente néanmoins l'inconvénient d'être compliquée et, de ce fait, coûteuse car elle se compose de deux tunnels de lavage ayant chacun ses fonctionnalités propres. Le tunnel de lavage haute pression comporte des postes indissociables. Le tunnel à rouleaux comporte des postes dont les fonctionnalités peuvent être dissociées. C'est ainsi que la lavage n'est pas nécessairement associé à un séchage en sortie. Le nettoyage peut être plus ou moins intense avec utilisation d'un portique à rouleaux ou des deux portiques à rouleaux.

Enfin, l'installation de lustrage est une possibilité offerte en sortie des deux installations à condition que le véhicule soit sec car le lustrage ne peut se faire dans cette installation que si le véhicule est séché. Cette possibilité offre également l'inconvénient d'un risque de disfonctionnement si le véhicule, quoique sec n'est pas suffisamment nettoyé, les particules de sable accrochés la carrosserie risquent d'être entraînées par les rouleaux du portique lustreur et de rayer la carrosserie.

Outre la complexité de l'installation proprement dite, il est également gênant pour l'utilisateur du devoir d'abord traverser l'un des tunnels pour arriver dans l'installation de lustrage.

### But de l'invention

La présente invention a pour but de développer une installation de lavage de véhicule avec possibilité de lustrage, et réduisant l'encombrement de l'installation pour se limiter à un seul chemin de passage du véhicule offrant toutes les possibilités de lavage entre le lavage par haute pression, le lavage par rouleaux et le lustrage.

### Exposé et avantages de l'invention

A cet effet, l'invention concerne une installation de lavage de véhicule composée d'un tunnel de lavage unique caractérisée en ce que
- la ligne de passage du véhicule comprend dans l'ordre en aval de l'arceau de prélavage,
   * un portique haute pression,
   * un ou plusieurs portiques à rouleaux précédés chacun d'un un arceau de distribution de mousse,
   * un portique lustreur précédé d'un arceau de distribution de mousse,
   * un arceau de rinçage,
   * un portique de séchage,
- la centrale de commande recevant le choix de l'utilisateur (formule de lavage) et commandant le fonctionnement des arceaux et des portiques,
- la centrale de commande intégrant une combinaison de fonctionnement du portique haute pression et des portiques, n'autorisant le fonctionnement des portiques lustreurs comme portiques lustreurs que si, préalablement, le portique haute pression a été mis en oeuvre par la formule de lavage choisie par l'utilisateur.

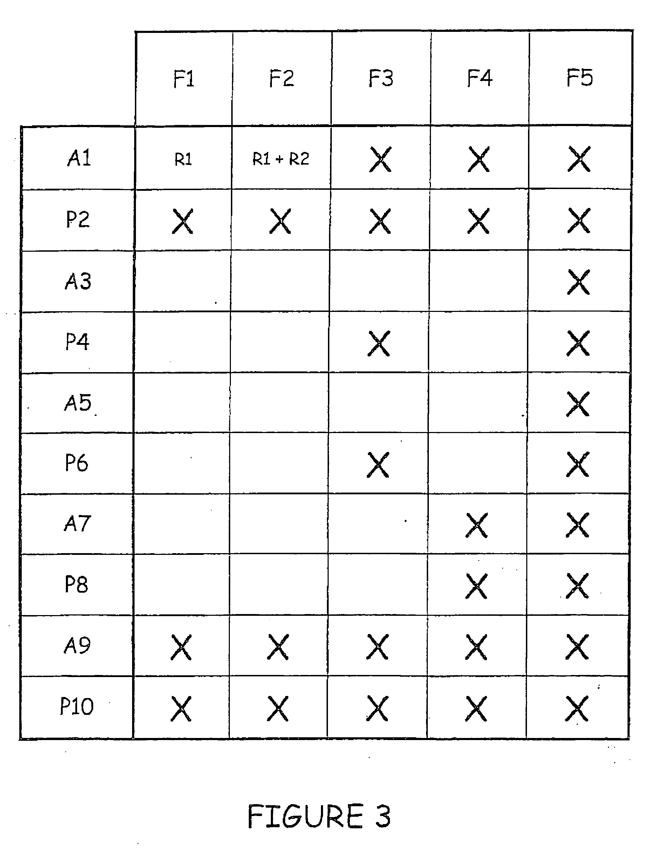

Le tunnel de lavage selon l'invention simplifie non seulement l'installation de l'équipement puisqu'il y a un seul chemin suivi par les véhicules quelles que soient la formule et l'option de lavage choisies. Selon l'invention, on a la possibilité de choisir différentes formules de lavage et à l'intérieur de chaque formule il y a des options. Ces formules et options ne sont pas détaillées ici. Certaines sont présentées à titre d'exemple à la figure 3. Ces multiples possibilités intégrées à l'intégration constituée par un unique tunnel de lavage évitent le dédoublement de moyens comme dans l'installation de l'art antérieur et permet une utilisation plus efficace des moyens communs aux différentes formules et options de lavage. L'invention permet également d'éviter tout mauvais fonctionnement, en particulier au niveau du portique lustreur et les conséquences que ces mauvais fonctionnements peuvent avoir sur l'état de la carrosserie.

Le tunnel de lavage fonctionne également plus rapidement que la juxtaposition de deux tunnels de lavage suivis d'une installation de lustrage car les opérations se succèdent directement sans rupture de charge, le véhicule étant entraîné à travers les différents postes y compris l'installation de lustrage.

La dissociation des fonctions, c'est-à-dire celles des arceaux et des portiques permet une grande diversité de formules et options sans que cela ne modifie la fluidité de passage des véhicules dans le tunnel. Plusieurs véhicules avec des formules et options différentes peuvent passer les uns à la suite des autres dans le tunnel.

De façon avantageuse, les portiques à rouleaux en aval du portique haute pression précédés d'un arceau de distribution de mousse sont équipés de rouleaux à lamelles en matière plastique et ces portiques peuvent être commandés pour fonctionner comme portiques de nettoyage, humides avec projection d'eau et de liquide de nettoyage et mise hors service des arceaux ou encore comme rouleaux lustreurs, à sec mais avec mise en oeuvre des arceaux de distribution de mousse.

De manière intéressante, l'arceau de prélavage est équipé de deux rampes de buses, l'une distribuant du liquide de lavage et l'autre de la mousse lustrante, la première rampe fonctionnant seule ou en combinaison avec la seconde rampe.

Suivant une autre caractéristique avantageuse, la fonction logique ET est intégrée dans les formules et options de fonctionnement de la commande centrale. Cela facilite la réalisation de l'installation et la prise en compte des éventuelles modifications de celle-ci, le remplacement d'un équipement, etc.

Suivant une autre caractéristique avantageuse, la commande des cycles de fonctionnement des postes du tunnel est exécutée par la centrale de commande.

### Dessins

La présente invention sera décrite ci-après de manière plus détaillée à l'aide d'un mode de réalisation représenté dans les dessins annexés dans lesquels :
- la figure 1 est un schéma de système de tunnels de lavage selon l'état de la technique,
- la figure 2 est un schéma d'un tunnel de lavage selon l'invention,
- la figure 3 est un tableau de combinaisons possibles pour des formules de lavage.

### Description d'un mode de réalisation

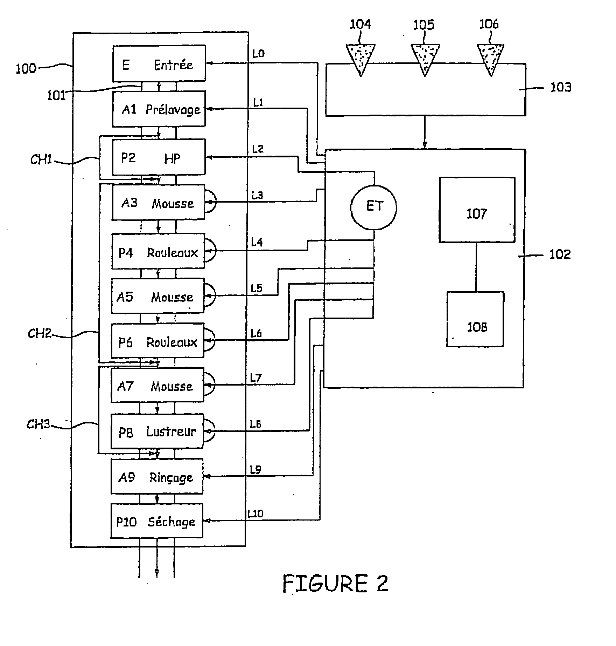

Selon la figure 2, l'invention concerne un tunnel de lavage de véhicules équipé d'une succession d'arceaux et de portiques ayant différentes fonctions. Ces arceaux et portiques dissociés sont reliés à un poste de commande recevant les choix des utilisateurs (formules et options) pour commander le cycle de fonctionnement des équipements du tunnel de lavage.

Pour ne pas encombrer les dessins et compliquer la descriptions, les moyens connus tels que le chemin de circulation du véhicule avec les moyens d'entraînement de celui-ci, les arceaux et les portiques ainsi que leurs équipement tels que les buses et les rouleaux ne sont pas représentés et leur description détaillée ne sera pas faite.

Le tunnel 100 comporte une ligne de passage 101 du véhicule. Cette ligne est équipée de rails et d'un chariot ou convoyeur déplaçant le véhicule de l'entrée vers la sortie entre les différents postes formés par les arceaux et les portiques pour effectuer les opérations demandées par le client. En réalité il y a plusieurs chariots ou galets d'entraînement portés par une chaîne sans fin pour entraîner plusieurs véhicules les uns derrière les autres à travers le tunnel, que ces véhicules aient choisi la même formule de lavage ou des formules différentes ainsi que des programmes différents dans les formules.

Les postes sont constitués par une entrée E pour la présentation du véhicule sur le chemin de circulation avec préparation manuelle du véhicule et détrempe. Dans cette zone de détrempage, le véhicule est nettoyé à la main par application d'un produit de nettoyage ou de lavage et élimination des saletés au jet à haute pression. Cette première opération de nettoyage permet de nettoyer pratiquement le véhicule pour en éliminer les « aspérités » telles que des grains de sable pour éviter qu'ensuite ces grains ou « aspérités » ne rayent la carrosserie lorsqu'ils sont entraînés par les rouleaux.

Le poste d'entrée E est muni d'un arceau de prélavage A1 équipé d'une rampe de buses R1 pour projeter de la mousse de prélavage sur le véhicule. Une seconde rampe de buses R2 permet de projeter de la mousse lustrante sur le véhicule. L'arceau de prélavage A1 distribue de la mousse de prélavage quelle que soit la formule ou option choisie. Toutefois dans le cas des formules avec lavage haute pression uniquement (portique P2) la mousse de prélavage est complétée par une mousse lustrante, ces deux types de mousses étant distribués par chaque rampe de buses R1, R2. Dans le cas de distribution de mousse lustrante, le portique haute pression P2 étale la mousse lustrante et créée un brillant car il n'y a pas de frottements.

L'arceau de prélavage A1 est suivi du portique haute pression P2 équipé de buses d'eau à haute pression nettoyant la carrosserie et le châssis. Ces buses sont réparties sur les côtés et le dessus. Les buses latérales sont situées en regard du véhicule et les buses du dessus sont portées par une traverse équipée de cellules suiveuses pour commander le mouvement de descente ou de montée de ces buses en suivant le profil de la carrosserie du véhicule. Ensuite, le tunnel 100 comporte un ou deux portiques P4, P6 à rouleaux précédés chacun par un arceau A3, A5 muni de rampes de buses pour distribuer de la mousse lustrante. Chaque portique comporte deux rouleaux verticaux et un rouleau horizontal pour traiter les côtés et le dessus du véhicule. Les rouleaux sont formés de cordons ou de lamelles de matière plastique. En fait ces lamelles sont découpées dans des disques de matière plastique empilés les uns sur les autres sur l'axe du rouleau. Cet ensemble de portiques P4, P6 a une double fonction :
- les portiques peuvent travailler comme des rouleaux de nettoyage avec projection d'eau additionnée d'agents de lavage,
- les portiques peuvent travailler comme des rouleaux lustreurs si les arceaux A3, A5 de distribution de mousse sont activés.

Ce fonctionnement de lustrage est possible si, préalablement, le véhicule a subi le nettoyage dans le portique haute pression, P2.

Dans le cas contraire, cette option n'est pas possible.

Les rouleaux à lamelle en matière plastiques des deux portiques P4, P6 permettent cette double fonction car ils ne s'imprègnent pas de mousse de lavage ou de mousse lustrante. Grâce à cette matière plastique, les rouleaux des portiques P4, P6 réalisent un prélustrage. Le ou les rouleaux des portiques effectuent un mouvement relatif par rapport au véhicule. Les portiques P4, P6 fonctionnant pour le nettoyage avec du liquide de lavage, permettent d'éliminer les éventuels restes de film routier qui peuvent subsister sur le véhicule. Il s'agit en fait du dépôt de la couche de saletés et de poussière très fine adhérent à la carrosserie.

En aval du portique à rouleaux P6, on a un arceau A7 qui pulvérise également de la mousse lustrante sur le véhicule. Cette pulvérisation se fait par des buses avec déplacement du véhicule par rapport à l'arceau A7 fixe.

L'arceau de mousse lustrante A7 est suivi d'un portique lustreur P8. Ce portique se compose d'un châssis équipé de trois rouleaux lustreurs en matière textile (feutre), deux rouleaux latéraux et un rouleau horizontal supérieur. Le portique est totalement fixe. Le véhicule convoyé passe dessous et les rouleaux suivent le contour du véhicule. Ces rouleaux se déplacent longitudinalement par rapport au véhicule en suivant les contours de celui-ci.

Les rouleaux composant ce portique également fixe sont formés de bandelettes de tissu assurant le lustrage. Comme dans les autres portiques de lustrage, l'opération se fait à sec, les rouleaux étalant la mousse et lustrant la carrosserie. Ces rouleaux ne distribuent pas eux-mêmes de produits.

En aval de ce portique lustreur P8, un arceau de rinçage A9 pulvérise sur le véhicule de la cire froide ou chaude et rince avec de l'eau osmosée. Le rinçage est nécessaire pour enlever les restes de mousse lustrante qui pourraient subsister sur la carrosserie et gêneraient le séchage.

L'arceau de rinçage A9 est suivi par un portique de séchage P10 comportant des buses soufflant de l'air sur la carrosserie.

L'installation comprend également une centrale de commande 102 reliée à une entrée de données 103. L'entrée 103 est composée d'un clavier 104 et d'un ou plusieurs lecteurs de cartes 105, 106 permettant à l'utilisateur d'introduire sa commande, c'est-à-dire le choix de la formule de lavage en utilisant une carte spéciale correspondant à la formule de lavage choisie ou une carte de crédit en choisissant alors la formule de lavage par le clavier ou encore par un opérateur à l'entrée du tunnel. Les informations sont transmises à la centrale de commande équipée d'un microprocesseur ou d'un automate programmable commandant la mise en route des postes du tunnel. Il comporte également une mémoire 108 contenant les différentes formules et options de lavage. Les lignes de transmission des instructions du poste de commande 102 vers les postes E, A1 ... P10 et les éventuels signaux de retour portent les références L0-L10 Les signaux de commande envoyés vers les postes E-P10 sont des signaux de déclenchement d'un cycle opératoire. En variante, il peut également s'agir de la succession des signaux d'un cycle opératoire suivant que la gestion du fonctionnement du tunnel est décentralisée vers les différents postes ou que celle-ci est regroupée dans la centrale de commande. Cette dernière solution est la plus intéressante pour l'efficacité de la gestion car elle permet de tenir compte directement des signaux de fonctionnement envoyés en retour par les différents postes E-P10 vers la centrale de commande 102. La centrale de commande 102 intègre une combinaison ET logique n'autorisant le fonctionnement des portiques lustreurs P4, P6, P8 que si, préalablement et dans la même formule ou option, on a utilisé le portique haute pression P2. Cette combinaison est schématisée dans le poste de commande par la fonction logique ET reliant les lignes des portiques P2 et P4, P6, P10. Cette fonction logique ET ainsi mise en évidence peut être réalisée par le câblage du circuit mais, de préférence, cette fonction est enregistrée dans les programmes contenus dans la mémoire 108 du microprocesseur 107.

Le fonctionnement des postes A1-P10 dissociés du tunnel proprement dit est demandé par le poste de commande 103.

La figure 3 montre différentes possibilités d'utilisation des postes du tunnel. Ainsi, le portique haute pression P2 peut être contourné (chemin CH1). Il en est de même des portiques à rouleaux P4, P6 et du portique lustreur P8 avec l'arceau de distribution de mousse A7 qui le précède (chemins CH2, CH3).

La figure 3 donne schématiquement un tableau de différentes possibilités d'utilisation du tunnel de lavage.

La première colonne figure les postes du tunnel de lavage : l'arceau A1, le portique P2, l'arceau A3, le portique P4, l'arceau A5, le portique P6 suivis de l'arceau A7, du portique P8, de l'arceau A9 et du portique P10. Les colonnes suivantes indiquent l'occupation des cases et le numéro des postes utilisés dans les différentes formules et options de lavage portant les références F1, F2, F3, F4, F5. Les combinaisons sont enregistrés dans la mémoire 108 du processeur 107 de la centrale de commande 102.

Ce tableau montre en particulier que les arceaux de distribution de mousse A3, A5, A7 et les portiques lustreurs P4, P6, P8 ne peuvent être utilisés que si, préalablement, le véhicule est passé par le portique de lavage à haute pression P2.

Comme indiqué schématiquement à la figure 3, l'entrée de donnée 103 permet le choix des formules et options.

En pratique le choix des formules et options peut s'effectuer à partir de deux postes différents à l'aide de deux pupitres reliés entre eux.

Selon la fréquentation de l'installation, le choix des formules et options s'effectue soit au niveau du poste par exemple de la caisse principale, soit au niveau d'un poste situé à l'entrée du tunnel de lavage. Ces postes sont utilisés par des personnes différentes. Le poste principal qui se situe au niveau de la caisse est utilisé par une caissière et le poste situé à l'entrée de l'installation de lavage est utilisé par l'opérateur qui fait positionner le véhicule sur le convoyeur et le prépare.

A fréquentation élevée, les deux postes sont occupés, le poste principal s'occupant du choix des formules et options et le poste à l'entrée de la chaîne est alors vacant.

En faible fréquentation, seul le poste à l'entrée du tunnel de lavage est utilisé par l'opérateur qui effectue à la fois l'encaissement et la préparation de chaque véhicule.

## Revendications

1. Tunnel de lavage de véhicules comprenant une centrale de commande (102), une entrée de détrempe (E) et un arceau de prélavage (A1), des moyens de nettoyage, de rinçage (A9) et de séchage (P10),
**caractérisé en ce que**
- la ligne de passage du véhicule comprend dans l'ordre en aval de l'arceau de prélavage (A1),
* un portique haute pression (P2),
* un ou plusieurs portiques à rouleaux (P4, P6) précédés chacun d'un arceau de distribution de mousse (A3, A5),
* un portique lustreur (P8) précédé d'un arceau de distribution de mousse (A7),
* un arceau de rinçage (A9),
* un portique de séchage (P8),
- la centrale de commande (102) recevant le choix de l'utilisateur, dit formule de lavage, et commandant le fonctionnement des arceaux et des portiques,
- la centrale de commande (102) intégrant une combinaison de fonctionnement du portique haute pression (P2) et des autres portiques (P4, P6, P8), n'autorisant le fonctionnement du portique lustreur (P8) comme portique lustreur que si, préalablement, le portique haute pression (P2) a été mis en oeuvre par la formule de lavage choisie par l'utilisateur.

2. Tunnel de lavage selon la revendication 1,
**caractérisé en ce que**
les portiques à rouleaux (P4, P6) en aval du portique haute pression (P2) précédés d'un arceau de distribution de mousse (A3, A5) sont équipés de rouleaux à lamelles en matière plastique et ces portiques peuvent être commandés pour fonctionner comme portiques de nettoyage, humides avec projection d'eau et de liquide de nettoyage et mise hors service des arceaux (A3, A5) ou encore comme rouleaux lustreurs, à sec mais avec mise en oeuvre des arceaux de distribution de mousse (A3, A5).

3. Tunnel de lavage selon la revendication 1,
**caractérisé en ce que**
l'arceau de prélavage (A1) est équipé de deux rampes de buses (R1, R2), l'une distribuant du liquide de lavage et l'autre de la mousse lustrante, la première rampe (R1) fonctionnant seule ou en combinaison avec la seconde rampe (R2).

4. Tunnel de lavage selon la revendication 1,
**caractérisé en ce que**
la fonction logique (ET) est intégrée dans les formules ou options de fonctionnement de la centrale de commande (102).

5. Tunnel de lavage selon la revendication 1,
**caractérisé en ce que**
la commande des cycles de fonctionnement des postes (E-P10) du tunnel est exécutée par la centrale de commande (102).

## Claims

1. Tunnel car wash comprising a control centre (102), a wetting entrance (E) and a pre-wash arch (A1), cleaning, rinsing means (A9) and drying means (P10),
**characterised in that**
- the line through which the vehicle passes comprises, in order, downstream of the pre-wash arch (A1),
* a high-pressure portal structure (P2),
* one or more roller portal structures (P4, P6), each preceded by a foam-dispensing arch (A3, A5),
* a polisher portal structure (P8) preceded by a foam-dispensing arch (A7),
* a rinsing arch (A9),
* a drying portal structure (P8),
- and the control centre (102) receives the user's selection, namely the wash programme, and controls operation of the arches and portal structures,
- and the control centre (102) integrates an operating combination of high-pressure portal structure (P2) and other portal structures (P4, P6, P8) and does not permit operation of the polishing portal structure (P8) unless the high-pressure portal structure (P2) has been used beforehand by the wash formula selected by the user.

2. Tunnel car wash as claimed in claim 1,
**characterised in that**
the roller portal structures (P4, P6) downstream of the high-pressure portal structure (P2) preceded by foam dispensing arch (A3, A5) are equipped with rollers with strips of plastic material and these portal structures can be controlled so that they function as cleaning portal structures, in which case they are wet and project water and cleaning fluid and the arches (A3, A5) are placed out of service, or alternatively as polishing rollers, in which case they are dry but the foam-dispensing arches (A3, A5) are switched on.

3. Car wash tunnel as claimed in claim 1,
**characterised in that**
the pre-wash arch (A1) is equipped with two banks of nozzles (R1, R2), one dispensing washing liquid and the other polishing foam, the first bank (R1) operating alone or in combination with the second bank (R2).

4. Car wash tunnel as claimed in claim 1,
**characterised in that** the logic function (ET) is integrated in the formulas or function options of the control centre (102).

5. Car wash tunnel as claimed in claim 1,
**characterised in that**
the function cycles of the stations (E-P10) of the tunnel are run by the control centre (102).

## Patentansprüche

1. Tunnelwaschanlage für Fahrzeuge, mit einer Steuerzentrale, einem Einweicheingang (E) und einem Vorwäschebogen (A1), Einrichtungen zum Reinigen, Spülen (A9) und Trocknen (P10),
**dadurch gekennzeichnet, daß**
- die Durchlaufstrecke des Fahrzeugs nach dem Vorwäschebogen (A1) der Reihe nach aufweist:
* eine Hochdruckbrücke (P2),
* eine oder mehrere Walzenbrücken (P4,P6), denen jeweils ein Schaumverteilungsbogen (A3,A5) vorausgeht,
* eine Polierbrücke (P8), der ein Schaumverteilungsbogen (A7) vorausgeht,
* einen Spülbogen (A8),
* eine Trocknungsbrücke (P8),
- die Steuerzentrale (102) die Auswahl des Benutzers, das sogenannte Waschprogramm, empfängt und den Betrieb der Bögen und Brücken steuert,
- die Steuerzentrale (102) eine Kombination des Betriebs der Hochdruckbrücke (P2) und der anderen Brücken (P4,P6,P8) umfaßt und den Betrieb der Polierbrücke (P8) als Polierbrücke nur dann erlaubt, wenn zuvor die Hochdruckbrücke (P2) durch das von dem Benutzer gewählte Waschprogramm aktiviert worden ist.

2. Tunnelwaschanlage nach Anspruch 1,
**dadurch gekennzeichnet, daß** die nach der Hochdruckbrücke (P2) angeordneten Walzenbrücken (P4,P6), denen ein Schaumverteilungsbogen (A3,A5) vorausgeht, mit Walzen aus Kunststofflamellen ausgestattet sind und diese Brücken gesteuert werden können, um als Naßreinigungsbrücken mit Spritzen von Wasser und Reinigungsflüssigkeit und mit deaktivierten Bögen (A3,A5) oder auch als Trockenpolierwalzen aber mit aktivierten Schaumverteilungsbögen (A3,A5) zu arbeiten.

3. Tunnelwaschanlage nach Anspruch 1,
**dadurch gekennzeichnet, daß** der Vorwäschebogen (A1) mit zwei Düsenrampen (R1,R2) ausgestattet ist, wobei die eine die Waschflüssigkeit und die andere den Polierschaum verteilt, wobei die erste Rampe (R1) allein oder in Kombination mit der zweiten Rampe (R2) arbeitet.

4. Tunnelwaschanlage nach Anspruch 1,
**dadurch gekennzeichnet, daß** der logische Arbeitsablauf (ET) in den Betriebsprogrammen oder -optionen der Steuerzentrale (102) integriert ist.

5. Tunnelwaschanlage nach Anspruch 1, **dadurch gekennzeichnet, daß** die Steuerung der Betriebszyklen der Stationen (E-P10) des Tunnels von der Steuerzentrale (102) durchgeführt wird.
